# EUROPEAN PATENT APPLICATION

(11) **EP 1 781 018 A1**
(43) Date of publication of application: **02.05.2007**
(21) Application number: 05782305.6
(22) Date of filing: 08.09.2005
(51) Int. Cl.: H04N 5/225, B60R 1/00, G03B 7/28, H04N 5/243, H04N 7/18

(54) **CAMERA AND CAMERA SYSTEM**

(30) Priority: 10.09.2004 JP 2004264260
(71) Applicant: MATSUSHITA ELECTRIC INDUSTRIAL CO., LTD., Osaka 571-8501 (JP)
(72) Inventor: MIZUSAWA, Kazufumi Matsushita Elc.Ind.Co.Ltd, 3-7 Shiromi 1Chome Osaka 540-6319 (JP)
(74) Representative: Grünecker, Kinkeldey, Stockmair & Schwanhäusser Anwaltssozietät
(86) International application number: PCT/JP2005/016532
(87) International publication number: WO 2006/028180

(57) **Abstract**

A problem that the invention is to solve is to provide a camera and a camera system which can provide the driver with information on a three-dimensional object lying on the periphery of the vehicle which is assumed to be highly inevitable for the driver in the form of a good image. In this invention, there is provided a camera system including a camera (1) for photographing the periphery of the vehicle, a monitor (4) for presenting the driver with an image photographed by the camera and a sensor unit (3) for detecting a three-dimensional obj ect lying on the periphery of the vehicle, wherein the camera (1) includes an adjusting unit (15) for automatically adjusting gain and aperture and a criteria determination unit (14) for determining on an image area which should constitute an adjusting criteria using an output of the sensor unit (3). By adopting this configuration, the camera system can be realized which can provide the driver with information on a three-dimensional object lying on the periphery of the vehicle which is assumed to be highly inevitable for the driver in the form of a good image.

## Description

### <Technical Field>

The present invention relates to a camera adapted to be installed on a motor vehicle or the like and a camera system which can provide a driver of a motor vehicle with conditions surrounding the motor vehicle which are photographed by the camera as driving aiding information.

A conventional on-board camera system continues to provide the driver with good images even in the event that an environment surrounding the vehicle changes by incorporating therein an ALC (Automatic Light Control) circuit which maintains constant the amount of incident light by automatically adjusting a lens diaphragm according to the illuminance of a subject within a screen (for example, refer to Non-Patent Document No. 1) and an AGC (Automatic Gain Control) circuit which maintains constant the level of an output signal by controlling gain according to the level of an input signal.

In addition, an automotive driving monitoring system has also been proposed in which a (twin-lens) stereo camera using two on-board cameras is used as a preview sensor (for example, refer to Patent Document Nos. 1 and 2).

However, the conventional on-board camera systems are intended to provide good images over the whole of a screen or on a predetermined area or areas of the screen. Due to this, there has existed a problem that information which is inevitable for the driver to realize a safety driving in an area or areas he or she needs is not necessarily presented in the form of a good image or images.

Additionally, the (twin-lens) stereo camera system described in Patent Document No. 1 is such as to be configured to devise a countermeasure against temperature and is not such as to provide the driver with information necessary for safety driving in the form of good images in image areas the driver needs by making good use of the twin-lens camera. On the other hand, while what is described in Patent Document No. 2 is intended to construct an automotive driving monitoring system by making use of a (twin-lens) camera system, similarly, the system so constructed is not such as to provide the driver with information necessary for safety driving in the form of good images in image areas the driver needs.

The invention was made in view of the situations, and an object thereof is to provide a camera and a camera system which can provide the driver with information on an elevated or three-dimensional object lying in an area on the periphery of the vehicle which the driver assumes highly inevitable.
Non-Patent Document No. 1: Introduction to CCD Camera Techniques written by Hiroo Takemura and published by Corona Co., Ltd on August 20, 1998 (on pages 164 to 165);
Patent Document No. 1: Japanese Unexamined Patent Publication No. 2001-88609;
Patent Document No. 2: Japanese Unexamined Patent Publication No. 2004-173195.

### <Disclosure of the Invention>

According to a first aspect of the invention, there is provided a camera including a lens, a diaphragm, and a photoelectric conversion unit which receives light that has passed through the lens and the diaphragm for photographing the periphery of a motor vehicle, the camera being characterized by including an adjusting unit connected to the photoelectric conversion unit and a driving means for the diaphragm for automatically adjusting gain and aperture, a criteria determination unit for determining on an image area which should constitute an adjusting criteria by utilizing an output from a sensor unit located outside a camera system for detecting a three-dimensional object lying on the periphery of the vehicle and an image generating unit for converting a signal inputted from the adjusting unit into a signal mode that is to be displayed on a monitor. By adopting this configuration, the three-dimensional object can be provided in the form of a good image.

According to a second aspect of the invention, the invention is characterized by including a graphic unit for superposing a graphic on an area where a three-dimensional object detected by the sensor unit exists.

According to a third aspect of the invention, the invention is characterized in that the criteria determination unit has a function to determine an area where a three-dimensional object detected as being closest to the camera is displayed as an adjusting criteria area.

According to a fourth aspect of the invention, the invention is characterized in that the criteria determination unit has a function to determine an area where a three-dimensional object detected as lying within a certain distance from the camera is displayed as an adjusting criteria area.

According to a fifth aspect of the invention, the invention is characterized in that the adjusting unit includes an ALC (Automatic Light Control) circuit and/or an AGC (Automatic Gain Control) circuit.

According to a sixth aspect of the invention, the invention is characterized in that the ALC circuit automatically adjusts the lens diaphragm so as to maintain constant the amount of incident light.

According to a seventh aspect of the invention, the invention is characterized in that the AGC circuit adjusts gain so as to maintain constant the output level of a signal which falls within the range of an adjusting criteria that is communicated from the criteria determination unit.

In addition, according to an eighth aspect of the invention, there is provided a camera system including a camera for photographing the periphery of a motor vehicle, a sensor unit for detecting a three-dimensional object lying on the periphery of the vehicle, and a monitor which presents the driver with an image photographed by the camera, the camera system being characterized in that the camera includes an adjusting unit for automatically adjusting gain and aperture, a criteria determination unit for determining on an image area which should constitute an adjusting criteria by utilizing an output from the sensor unit and an image generating unit for converting a signal inputted from the adjusting unit into a signal mode that is to be displayed on the monitor. By adopting this configuration, a three-dimensional object detected by the sensor unit can be provided in the form of a good image.

In addition, according to a ninth aspect of the invention, there is provided a camera system including a camera for photographing the periphery of a motor vehicle, a sensor unit for detecting a three-dimensional obj ect lying on the periphery of the vehicle, a monitor which presents the driver with an image photographed by the camera and a graphic unit for superposing a graphic on an area within the image where the three-dimensional object detected by the sensor unit exists, the camera system being characterized in that the camera includes an adjusting unit for automatically adjusting gain and aperture, a criteria determination unit for determining on an image area which should constitute an adjusting criteria by utilizing an output from the sensor unit and an image generating unit for converting a signal inputted from the adjusting unit into a signal mode that is to be displayed on the monitor. By adopting this configuration, a three-dimensional object detected by the sensor unit can be provided in the form of a good image, and the three-dimensional object so detected can be displayed in an emphatic fashion so as to raise a warning for the driver.

According to a tenth aspect of the invention, the invention is characterized in that an image photographed by the camera is divided in advance into a plurality of areas which each constitute a minimum unit for an image area which should constitute an adjusting criteria determined in the criteria determination unit, in that the sensor unit is made to detect a three-dimensional object for each range that is photographed by each of the areas so divided and in that the adjusting unit includes a means which regards at least one of the areas as an image area for adjusting criteria. By adopting this configuration, since the sensor unit and the criteria determination unit can detect the existence of a three-dimensional object for each of the areas and determine whether or not the area constitutes the range of the criteria, respectively, the invention has an advantage where the robustness, which will be discussed later on, can be increased.

According to an eleventh aspect of the invention, the invention is characterized in that the criteria determination unit has a function to determine an area where a three-dimensional object detected as being closest to the camera is displayed as an adjusting criteria area. By adopting this configuration, even in the event that there exist a plurality of three-dimensional objects, a three-dimensional object lying closest to the subject vehicle which is assumed most important to the driver can be provided in the form of a good image.

According to a twelfth aspect of the invention, the invention is characterized in that the criteria determination unit has a function to determine an area where a three-dimensional object detected as lying within a certain distance from the camera is displayed as an adjusting criteria area. By adopting this configuration, even in the event that there exist a plurality of three-dimensional objects, a three-dimensional object lying within the certain distance from the vehicle which is assumed most important to the driver can be provided in the form of a good image.

According to a thirteenth aspect of the invention, the invention is characterized in that the sensor unit utilizes any of an ultrasonic sensor, a laser radar sensor and a millimeter wave radar sensor.

According to a fourteenth aspect of the invention, there is provided a camera system including a primary camera for photographing the periphery of a motor vehicle, a sensor unit for detecting distances from the vehicle to three-dimensional objects lying on the periphery of the vehicle by means of the primary camera and a secondary camera provided separately from the primary camera and a monitor for presenting the driver with images photographed by the cameras, the camera system being characterized in that the primary camera includes a lens and a diaphragm, an adjusting unit for automatically adjusting gain and the diaphragm, a criteria determination unit for determining on an image area which should constitute an adjusting criteria by utilizing an output from the sensor unit and an image generating unit for converting a signal inputted from the adjusting unit into a signal mode that is to be displayed on the monitor and the secondary camera includes at least a lens and a diaphragm, and an image generating unit.

According to a fifteenth aspect of the invention, the invention is characterized in that the sensor unit includes a recognition unit for detecting a three-dimensional object lying closest to the vehicle.

According to a sixteenth aspect of the invention, the invention is characterized in that the primary camera includes a graphic unit for superposing a graphic on an area where a three-dimensional object detected by the sensor unit exists.

According to a seventeenth aspect of the invention, the invention is characterized in that the adjusting unit includes an ALC (Automatic Light Control) circuit and/or an AGC (Automatic Gain Control) circuit.

According to an eighteenth aspect of the invention, the invention is characterized in that the ALC circuit automatically adjusts the lens diaphragm so as to maintain constant the amount of incident light.

According to a nineteenth aspect of the invention, the invention is characterized in that the AGC circuit adjusts gain so as to maintain constant an output level of a signal which falls within the range of an adjusting criteria that is communicated from the criteria determination unit.

According to a twentieth aspect of the invention, there is provided a method for preparing an image by a camera system including a camera for photographing the periphery of a motor vehicle, a sensor unit for detecting a three-dimensional object lying on the periphery of the vehicle and a monitor for presenting the driver with an image photographed by the camera, the method including the steps of photographing the periphery of the vehicle, detecting the position of a three-dimensional object lying on the periphery of the vehicle, calculating an area where the three-dimensional object is displayed from information on the position of the three-dimensional object obtained in the position detecting step, adjusting an image from the information on the position of the three-dimensional object and displaying the image on the monitor based on information on the image so adjusted.

According to a twenty-first aspect of the invention, there is provided a method for preparing an image by a camera system including a primary camera for photographing the periphery of a motor vehicle, a sensor unit for detecting distances from the vehicle to three-dimensional objects lying on the periphery of the vehicle by means of the primary camera and a secondary camera provided separately from the primary camera and a monitor for presenting the driver with images photographed by the cameras, the method including the steps of photographing the periphery of the vehicle, detecting the position of a three-dimensional object lying on the periphery of the vehicle, calculating an area where the three-dimensional object is displayed from information on the position of the three-dimensional object obtained in the position detecting step, adjusting an image from the information on the position of the three-dimensional object and displaying the image on the monitor based on information on the image so adjusted.

According to a twenty-second aspect of the invention, the invention is characterized by including a step of superposing a graphic on an area of the image where the three-dimensional object exists.

### <Brief Description of the Drawings>

Fig. 1 is a schematic diagram which shows the configuration of a camera according to a first embodiment of the invention.
Fig. 2 is a schematic diagram which shows an overall configuration of a camera system according to a second embodiment of the invention.
Fig. 3 is a block diagram which shows the configuration of the camera system according to the second embodiment of the invention.
Fig. 4(A) shows an area dividing example in a criteria determination unit according to second to fourth embodiments of the invention, (B) shows a monitor display example of a camera system, (C) shows a display example on a monitor in the second embodiment of the invention, and (D) shows a display example on the monitor in the second embodiment of the invention.
Fig. 5 is a flowchart which shows an image preparing method by the camera system according to the second embodiment of the invention.
Fig. 6 is a block diagram which shows the configuration of a camera system according to the third embodiment of the invention.

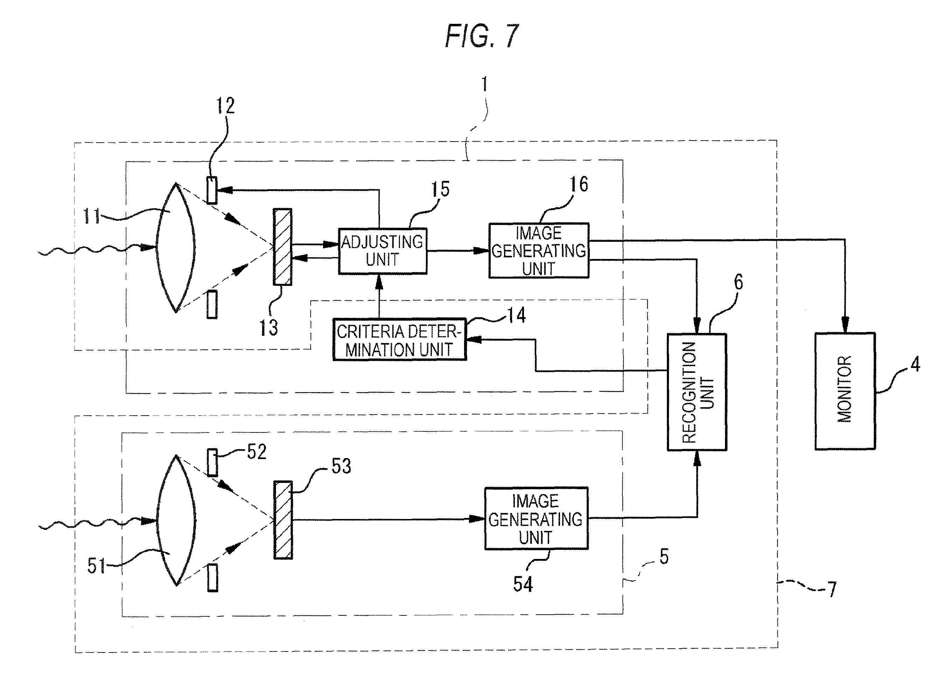

Fig. 7 is a block diagram which shows the configuration of a camera system according to the fourth embodiment of the invention.

### <Description of Reference Numerals and Characters>

1 a camera (a primary camera); 10 a housing; 10A a sensor input terminal 10A; 10B an image output terminal 10B; 2 a camera; 11, 51 a lens; 12, 52 a diaphragm; 13 a photoelectric conversion unit; 14 a criteria determination unit; 15 an adjusting unit; 16, 54 an image generating unit; 21 a graphic unit; 3 a sensor unit; 31 a sensor head; 32 a sensor processing unit; 4 a monitor; 5 a secondary camera (a sensor unit); 6 a recognition unit (a sensor unit); 7 a sensor unit; C a vehicle (vehicle body); M a human being (a three-dimensional object).

### <Best Mode for Carrying out the Invention>

Hereinafter, embodiments of the invention will be described in detail by reference to the accompanying drawings.

### (First Embodiment)

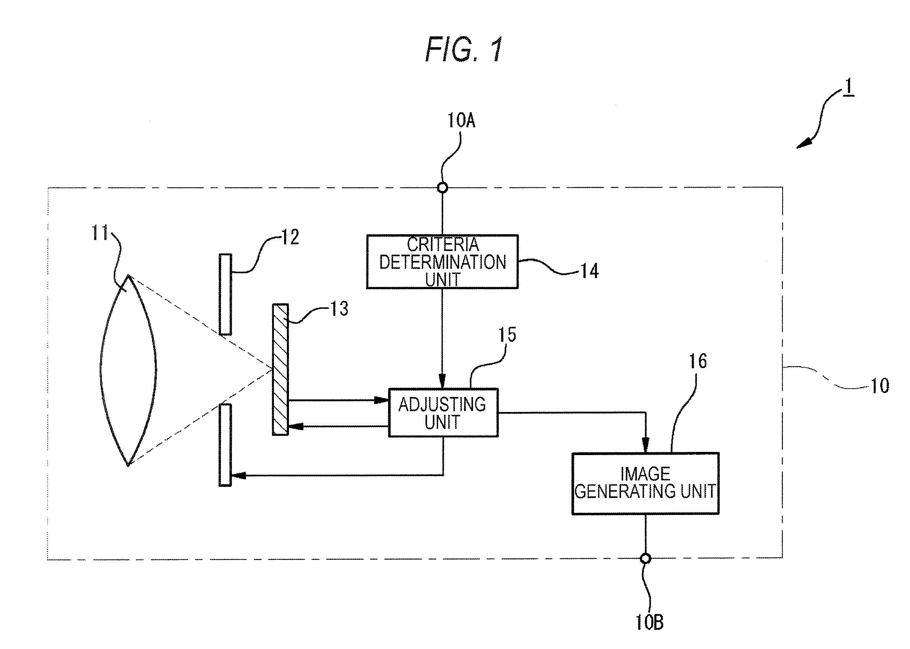

Fig. 1 shows an on-board camera according to a first embodiment of the invention, and this camera is such as to photograph, for example, a view on the periphery of the subject vehicle (hereinafter, referred to as the "vehicle body") such as a view seen from the rear or side thereof and includes a lens, a diaphragm 12, a photoelectric conversion unit 13, a criteria determination unit 14, an adjusting unit 15 and an image generating unit 16.

Among the constituent units, the lens 11 is such as to cause incident light to converge on the photoelectric conversion unit 13 in order to photograph a desired image on the periphery of the vehicle body, and a charge-coupled device (CCD) or the like is used for the photoelectric conversion unit 13. The criteria determination unit 14 is such as to determine on a photographing area that is assumed to be highly important (that should constitute a criteria) for the driver to perform safety driving or the like, and an input thereof is connected to an output of a sensor processing unit 32. In addition, this criteria determination unit 14 is such as to determine on an image area that should constitute an adjusting criteria by utilizing an output from a sensor unit, not shown, which is provided outside the camera to detect an elevated or three-dimensional object, and a sensor input terminal 10A is provided within a housing 10 thereof for connection to the sensor unit. The adjusting unit 15 is such as to adjust gain and aperture, and an input of the adjusting unit 15 is connected to an output of the criteria determination unit 14 and an output thereof is connected to a motor, not shown (and provided on a diaphragm driving means) , which is annexed to the diaphragm 12. In addition, apart from being connected to the photoelectric conversion unit 13, the adjusting unit 15 is also connected to an input of the image generating unit 16 at an output thereof. The image generating unit 16 is such as to convert a signal inputted from the adjusting unit 15 into a signal mode that is to be displayed on a monitor, and an image output terminal 10B is provided in the housing 10 for connection to the monitor, not shown, which is provided outside the camera 1.

Next, the operation of the camera 1 of this embodiment will be described.

The camera 1 outputs an image signal to the monitor, not shown, by adjusting aperture and gain by means of the adjusting unit 15 based on information on the position of a three-dimensional object that is inputted from the sensor unit 3 in order that the three-dimensional object is displayed in the form of a good image. Here, in the event that the adjustment is performed so that the whole of a display screen of the monitor is displayed in the form of a good image, for example, depending on sites and environments, there may occur a case where an image is produced in which a person is not necessarily displayed properly. As this occurs, the following adjustment will be carried out.

A ray of light that enters from the lens 11 is caused to converge on the photoelectric conversion unit 13 while the amount of light is being limited by the diaphragm 12. On the other hand, the adjusting unit 15 controls the adjusting amount of the diaphragm 12 so as to control the amount of light that is incident on and received by the photoelectric conversion unit 13 based on a signal inputted from the photoelectric conversion unit 13 and a signal on the range of an adjusting criteria which is inputted from the criteria determination unit 14.

Here, the criteria determination unit 14 determines on the range of the adjusting criteria by the information on the position of the three-dimensional object which is inputted from the sensor unit (this sensor is understood to connect to the criteria determination unit 14 within the camera 1 via the sensor input terminal 10A), not shown, and outputs a determination to the adjusting unit 15. On the other hand, the adjusting unit 15 adjusts the gain of a signal inputted from the photoelectric conversion unit 13 based on the range of the adjusting criteria and outputs a signal to the image generating unit 16. This image generating unit 16 converts a signal inputted from the adjusting unit 15 into a signal mode that is to be displayed on the monitor (this monitor is understood to connect to the image generating unit 16 within the camera 1 via the image output terminal 10B), not shown.

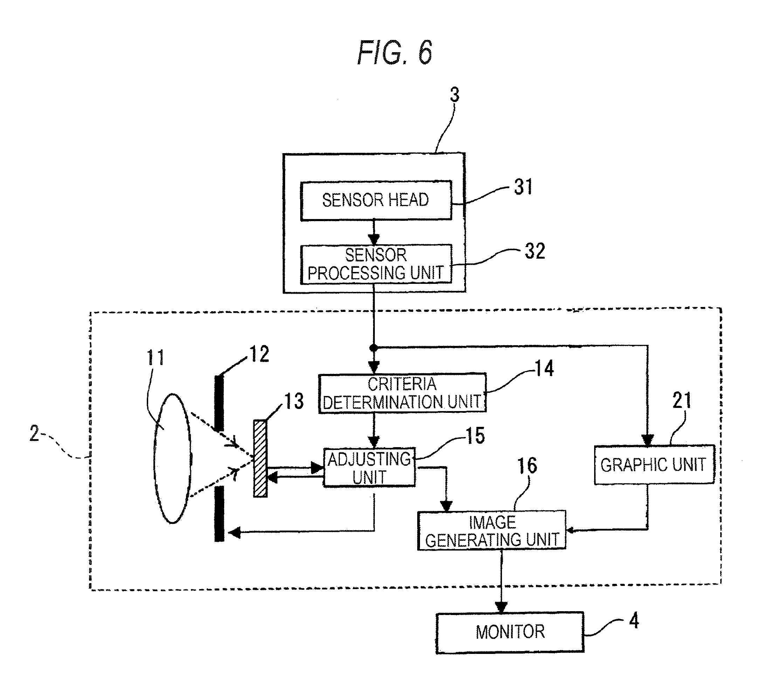

Consequently, the three-dimensional object detected by the sensor unit is displayed on the monitor in a good condition, so that the information can be provided to the driver which is important for him or her to perform the safety driving. Note that while no graphic unit is provided in this embodiment, a configuration may be adopted in which a graphic unit is provided for superposing a graphic on an area where a three-dimensional object detected in the sensor unit exists, as shown in Fig. 6.

### (Second Embodiment)

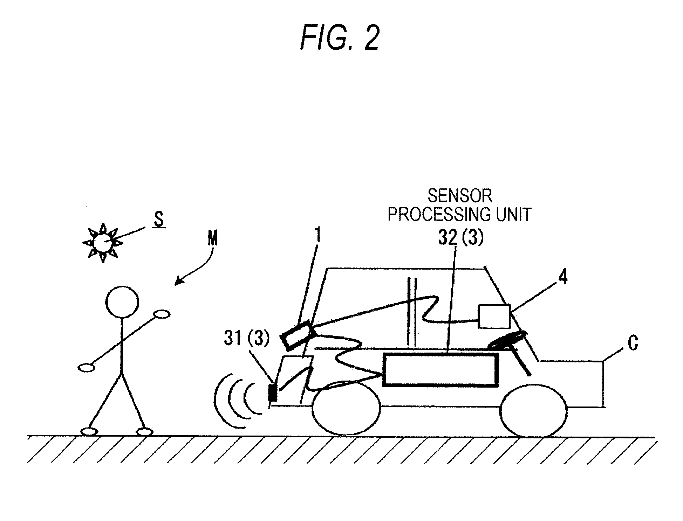

Fig. 2 shows an on-board camera system according to a second embodiment of the invention, and in this on-board camera system, a single camera 1 for photographing a view from the rear of a vehicle body C, a sensor unit 3 for detecting a three-dimensional object and a monitor 4 for displaying thereon an output image from the camera 1 are installed on the vehicle body.

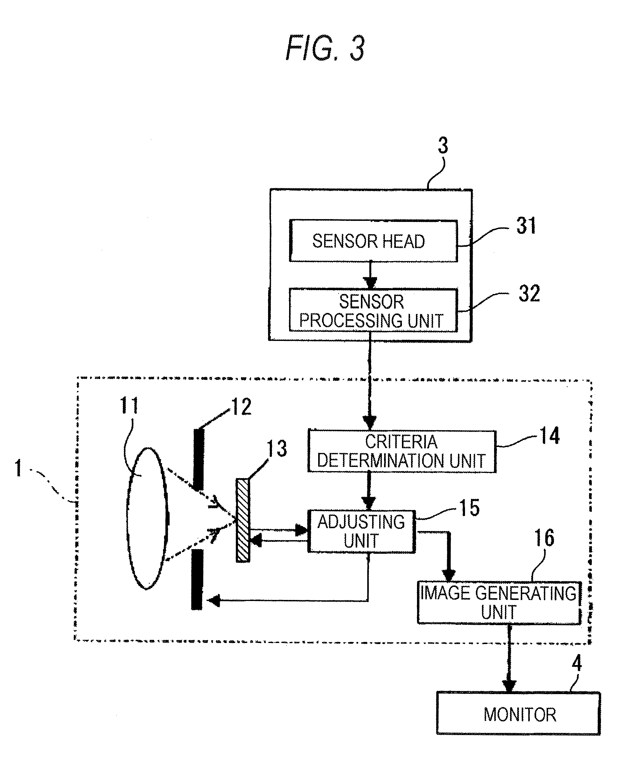

As shown in Fig. 3, similar constituent units to those of the first embodiment are used for the camera 1, and the camera 1 includes a lens 11, a diaphragm 12, a photoelectric conversion unit 13, a criteria determination unit 14, an adjusting unit 15, and an image generating unit 16. Among the constituent units, the lens 11 is such as to cause incident light to converge on the photoelectric conversion unit 13 in order to photograph a desired image on the periphery of the vehicle body, and a charge-coupled device (CCD) or the like is used for the photoelectric conversion unit 13. The criteria determination unit 14 is such as to determine on a photographing area that is assumed to be highly important (that should constitute a criteria) for the driver to perform safety driving or the like, and an input thereof is connected to an output of a sensor processing unit 32. The adjusting unit 15 is such as to adjust gain and aperture, and an input of the adjusting unit 15 is connected to an output of the criteria determination unit 14 and an output thereof is connected to a motor, not shown (and provided on a diaphragm driving means) , which is annexed to the diaphragm 12. In addition, apart from being connected to the photoelectric conversion unit 13, the adjusting unit 15 is also connected to an input of the image generating unit 16 at an output thereof.

The sensor unit 3 is such as to detect a three-dimensional object (for example, a pedestrian, a pole or the like) which lies on the road surface or the like which is situated in the vicinity of the rear of the vehicle body C by means of an ultrasonic sensor and includes a sensor head 31 and a sensor processing unit 32, as shown in Fig. 3. Of these constituent units, the sensor head 31 transmits and receives ultrasonic waves and outputs the result of a reception to the sensor processing unit 32. On the other hand, the sensor processing unit 32 is such as to process an output signal from the sensor head 31 so as to detect the existence or position of a three-dimensional object and is connected to an input of the criteria determination unit 14 at an output thereof.

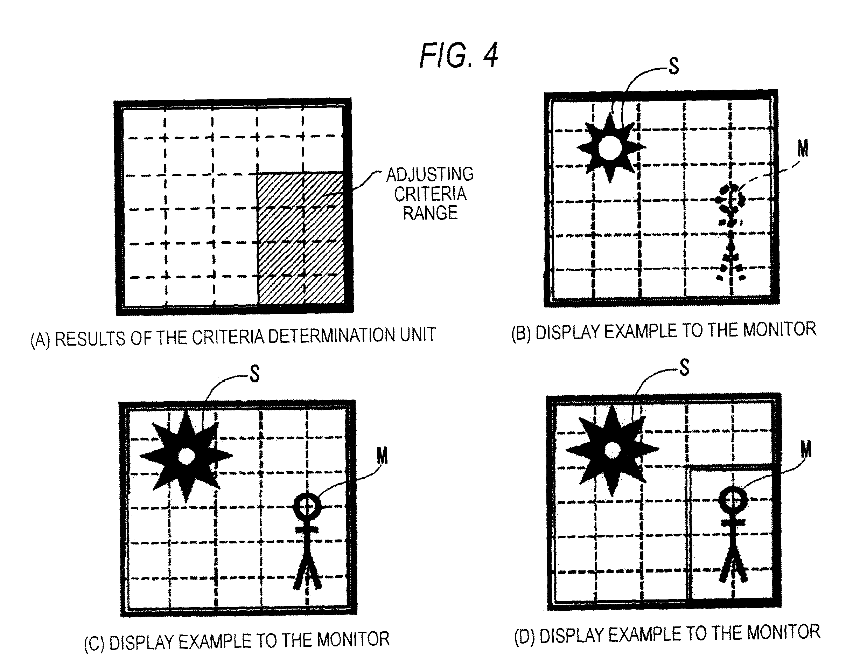

The operation of each of the constituent units of the camera system that is configured as has been described above will be described using Fig. 3.
I. Firstly, the operation of the camera 1 will be described.
   As with the first embodiment, the camera 1 outputs an image signal to the monitor 4 by adjusting aperture and gain by means of the adjusting unit 15 based on information on the position of a three-dimensional object that is inputted from the sensor unit 3 in order that the three-dimensional object is displayed in the form of a good image.
   For example, as shown in Fig. 2, in the event that a human being M exists in the vicinity of the rear of the vehicle body C as a three-dimensional object, the human being M is detected by the sensor unit 3. Then, an output of a signal related to information on an image photographed by the camera 1 is adjusted in the adjusting unit 15 with respect to aperture and gain so that the human being M is displayed on the monitor 4 in a good condition as shown in Fig. 4(C).
   Here, in the event that the adjustment is performed so that the whole of a display screen of the monitor 4 is displayed in the form of a good image, for example, depending on sites and environments, there may occur a case where an image is produced in which the human being is not necessarily displayed properly, as shown in Fig. 4B. As this occurs, as with the first embodiment, the following adjustment will be carried out. Note that dotted lines drawn vertically and horizontally in a grid-like fashion in monitor display examples in Fig. 4 are so drawn for the purpose of clearly showing the result of a division of the screen of the monitor 4 into segmented areas and hence are not displayed on the monitor 4 in reality.
   A ray of light that enters from the lens 11 is caused to converge on the photoelectric conversion unit 13 while the amount of light is being limited by the diaphragm 12. On the other hand, the adjusting unit 15 controls the adjusting amount of the diaphragm 12 so as to control the amount of light that is incident on and received by the photoelectric conversion unit 13 based on a signal inputted from the photoelectric conversion unit 13 and a signal on the range of an adjusting criteria which is inputted from the criteria determination unit 14.
   Here, the criteria determination unit 14 determines on the range of the adjusting criteria by the information on the position of the three-dimensional object which is inputted from the sensor unit 3 and outputs a determination to the adjusting unit 15. On the other hand, the adjusting unit 15 adjusts the gain of a signal inputted from the photoelectric conversion unit 13 based on the range of the adjusting criteria and outputs a signal to the image generating unit 16. This image generating unit 16 converts a signal inputted from the adjusting unit 15 into a signal mode that is to be displayed on the monitor 4. Consequently, the three-dimensional object detected by the sensor unit 3 is displayed on the monitor 4 in a good condition, so that the information can be provided to the driver which is important for him or her to perform the safety driving.
II. Next, the operation of the criteria determination unit 14 will be described in detail.
   In the criteria determination unit 14, for example, as shown in Fig. 4 (A), the whole of the screen is divided in advance into a plurality of areas as shown by dotted lines which are drawn vertically and horizontally in a grid-like fashion. Here, when a three-dimensional object is detected by the sensor unit 3, the position thereof is communicated from the sensor unit 3, and the criteria determination unit 14 calculates an area or areas where the three-dimensional object detected by the sensor unit 3 is displayed. As this occurs, by relating a detection area of the sensor unit 3 to a photographing range of the camera 1, the criteria determination unit 14 can calculate an area or areas of an image output of the camera 1 where the three-dimensional object is displayed from the position of the three-dimensional object that is detected in the sensor processing unit 32 of the sensor unit 3. As a result, the criteria determination unit 14 informs the adjusting unit 15 of the area or areas where the three-dimensional object detected by the sensor unit 3 is displayed as the range of an adjusting criteria. Note that in Fig. 4 (A), areas shaded with inclined lines constitute the adjusting criteria range.
   When a plurality of three-dimensional objects are detected by the sensor unit 3, only an area or areas where a three-dimensional object lying closest to the vehicle body C is displayed are communicated to the adjusting unit 15 as an adjusting criteria range. Alternatively, areas where three-dimensional objects lying within a certain distance from the vehicle body C are communicated to the adjusting unit 15 as an adjusting criteria range. Note that when no three-dimensional object is detected by the sensor unit 3, the criteria determination unit 14 outputs a predetermined area or areas as an adjusting criteria range.
III. Next, the operation of the adjusting unit will be described in detail.
   In the adjusting unit 15, as with the criteria determination unit 14, the whole of the screen is divided in advance into a plurality of areas as shown by the dotted lines in Fig. 4. Here, the adjusting unit 15 measures only the size of a signal of signals outputted from the photoelectric conversion unit 13 which falls within the range of the adjusting criteria that has been communicated thereto from the criteria determination unit 14, so as t control the aperture amount of the diaphragm 12. Namely, when a signal value is large, the aperture of the diaphragm is narrowed to limit the amount of light, whereas when the signal value is small, the aperture of the diaphragm is widened to increase the amount of light. Note that a circuit for controlling the aperture depending on the size of an output signal from the photoelectric conversion unit 13 is widely known as an ALC (Automatic Light Control) circuit.
   In addition, in the adjusting unit 15, gain is adjusted so that an output level of the signal which falls within the range of the adjusting criteria communicated from the criteria determination unit 14 is maintained constant. A gain adjusting circuit like this is widely known as an AGC (Automatic Gain Control) circuit.
IV. Next, the operation of the sensor unit 3 will be described in detail.

As the sensor unit 3, as has been described before, an ultrasonic sensor can be used, for example, and the sensor unit 3 is set so as to detect a three-dimensional object lying within the photographing range of the camera 1. In the event that an ultrasonic sensor is used for the sensor unit 3, the sensor unit 3 includes the sensor head 31 for outputting and receiving ultrasonic waves and the sensor processing unit 32 for analyzing an ultrasonic wave received so as to detect the position of the three-dimensional object. Of the constituent units, the sensor processing unit 32 outputs the position of the three-dimensional object that is so detected to the criteria determination unit 14. As this occurs, since the three-dimensional object detection in the sensor unit 3 may be carried out with a resolution which can somehow relate the position of the three-dimensional object to the areas divided in the criteria determination unit 14, the detection range of the sensor unit 3 may be divided in advance into a plurality of areas.

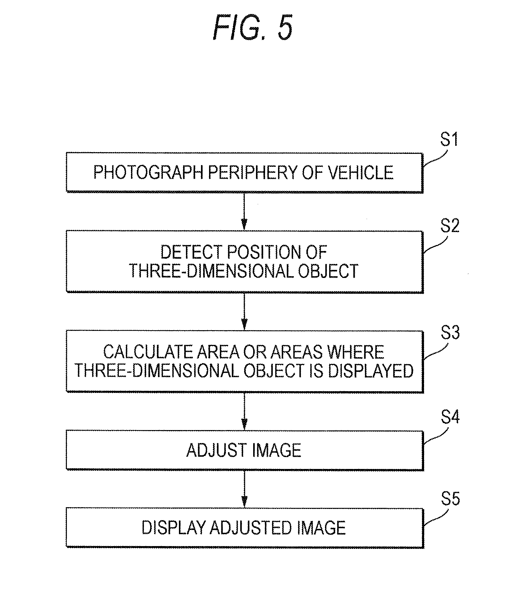

Next, a method for preparing an image using the camera system of the this embodiment will be described by reference to Fig. 5.

In this image preparing method, the periphery of the vehicle is photographed using the camera 1 (a first step S1), and the sensor processing unit 32 of the sensor unit 3 detects the position of the vehicle (a second step S2). Next, when data on the position of a three-dimensional object that is outputted from the sensor processing unit 32 of the sensor unit 3 is inputted thereinto, the criteria determination unit 14 calculates an area or areas where the three-dimensional object is displayed from the data (a third step S3). In addition, in the adjusting unit 15, the amount of aperture of the diaphragm 12 is controlled from the data on the position of the three-dimensional object. Namely, within the range of the adjusting criteria communicated thereto from the criteria determination unit 14, when the value of an input signal from the photoelectric conversion unit 13 is large, the aperture is narrowed to limit the amount of light, whereas when the value of the input signal is small, the aperture is widened to increase the amount of light (a fourth step S4). In addition, in the fourth step S4, the adjusting unit 15 adjusts the gain so that the output level of the input signal from the photoelectric conversion unit 13 is maintained constant within the range of the adjusting criteria thereto from the criteria determination unit 14, whereby the three-dimensional object detected by the sensor unit 3 is displayed on the monitor 4 in the form of a good image (a fifth step S5).

Consequently, according to the on-board camera system of this embodiment, the three-dimensional object detected by the sensor unit 3 can be provided in the form of a good image by providing the sensor unit 3 for detecting a three-dimensional object, the criteria determination unit 14 for determining on the imaging range which constitutes the criteria for calculating the adjusting amounts of the aperture and gain based on the detection results of the sensor unit 3 and the adjusting unit 15 for determining on and controlling the aperture amount and the gain from the imaging range of the criteria determination unit 14 (refer to Fig. 4(C)).

In addition, by dividing in advance the image photographed by the camera 1 into the plurality of areas which each constitute a minimum unit of the image area which should constitute the adjusting criteria that is determined in the criteria determination unit 14, the sensor unit 3 and the criteria determination unit 14 can detect the existence of a three-dimensional object for each area and determine whether or not the area should constitute the range of the criteria, respectively. Thus, by detecting a three-dimensional object for each area, for example, even in the event that part of the three-dimensional object is not detected by the ultrasonic sensor due to a reflection from part of the three-dimensional object being weak or due to the influence of noise, the likelihood where the whole of the three-dimensional object can be detected is increased, providing an advantage that the robustness is increased. In addition, since the areas are determined in advance, an area dividing process becomes unnecessary, the processing being thereby facilitated.

In addition, by configuring a process in which an area or areas where the three-dimensional object detected as being closes to the vehicle body C is displayed are determined as the adjusting criteria area or areas in the criteria determination unit 14, even in the event that a plurality of three-dimensional objects exist, the three-dimensional object lying closest to the vehicle body C which is assumed to be highly important to the driver can be provided in the form of a good image. Additionally, by configuring a process in which an area or areas where three-dimensional objects detected as lying within the certain distance from the vehicle body C are displayed are determined as the adjusting criteria area or areas, even in the event that a plurality of three-dimensional object exist, the three-dimensional objects lying within the certain distance from the vehicle body C which are assumed to be highly important to the driver can be provided in the form of good images.

### (Third Embodiment)

Hereinafter, an on-board camera system of a third embodiment according to the invention will be described using the drawings. Note that in this embodiment, like reference numerals are imparted to like portions to those of the first and second embodiments, so as to avoid the repetition of similar descriptions.

An on-board camera system 1 of this embodiment is different from the first embodiment in that a camera 2 is installed which includes further a graphic unit 21, as shown in Fig. 6. Namely, this camera 2 is made up of a lens 11, a diaphragm 12, a photoelectric conversion unit 13, a criteria determination unit 14, an adjusting unit 15, an image generating unit 16 and a graphic unit 21.

This graphic unit 21 is such as to determine on a graphic to be superposed and a display position from the position of a three-dimensional object that is inputted from a sensor unit 3 for output to the image generating unit 16.

The operation of the on-board camera system that is configured as has been described above will be described using Fig. 6.
I. Firstly, the operation of the camera 2 will be described.
   The camera 2 adjusts aperture and gain by the adjusting unit 15 based on information on the position of a three-dimensional object which is inputted from the sensor unit 3 so that the three-dimensional object is displayed in the form of a good image and outputs an image signal to a monitor 4.
   As a result, light that enters from the lens 11 is caused to converge on the photoelectric conversion unit 13 while the amount thereof being limited by the diaphragm 12. Namely, the adjusting unit 15 controls the adjusting amount of the diaphragm 12 so as to control the amount of light that is incident on the photoelectric conversion unit 13 based on a signal inputted from the photoelectric conversion unit 13 and a signal on the range of an adjusting criteria which is inputted from the criteria determination unit 14. Then, the criteria determination unit 14 determines on the range of the adjusting criteria from the information on the position of the three-dimensional object which is inputted from the sensor unit 3 and outputs a determination to the adjusting unit 15. Consequently, the adjusting unit 15 adjusts the gain of a signal inputted from the photoelectric conversion unit 13 based on the range of the adjusting criteria and outputs a signal to the image generating unit 16. On the other hand, the graphic unit 21 determines, as has been described above, on a graphic to be superposed and a display position from the position of the three-dimensional object which is inputted from the sensor unit 3 for output to the image generating unit 16.
   Next, following graphic information inputted from the graphic unit 21, the image generating unit 16 superposes a signal on the graphic inputted from the graphic unit 21 and converts the signal resulting from the superposition into a signal mode that is to be displayed on the monitor 4, whereby the monitor 4 displays thereon an image that is inputted from the image generating unit 16 so as to provide the driver therewith. A display example resulting then is shown in Fig. 4(D).
II. Next, the operation of the graphic unit 21 will be described in detail.

In the graphic unit 21, as with the criteria determination unit 14, the whole of the screen is divided in advance into a plurality of areas. Here, when a three-dimensional object is detected by the sensor unit 3, information on the position of the three-dimensional object so detected is outputted from the sensor unit 3 to the graphic unit 21. Then, the graphic unit 21 calculates an area or areas where the three-dimensional object detected by the sensor unit 3 is displayed and outputs to the image generating unit 16 graphic information for displaying a boundary of the area or areas as a graphic. Here, an area or areas where the boundary is displayed as a graphic are the area or areas which are determined as the adjusting criteria range in the criteria determination unit 14. In addition, the color of the graphic display may be changed according to a distance to the three-dimensional object. Additionally, in the event that the boundary still lies within a certain distance from the adjusting criteria range although it is out of the adjusting criteria range, the boundary of the area or areas where the three-dimensional object is displayed may be graphic displayed.

Thus, according to the on-board camera system of this embodiment, by providing the sensor unit 3 for detecting a three-dimensional object, the criteria determination unit 14 for determining on the image range which constitutes the criteria for calculation of adjusting amounts of the diaphragm 12 and gain based on the detection results of the sensor unit 3, the adjusting unit 15 for determining and controlling the aperture amount and gain from the image range determined in the criteria determination unit 14 and the graphic unit 21, the three-dimensional object detected by the sensor unit 3 can be displayed in the form of a good image, and the position of the three-dimensional object can be indicated clearly by the graphic. In addition, by graphic displaying the boundary of the area or areas where the three-dimensional object detected out of the adjusting criteria range, the position of the three-dimensional object can also be indicated clearly which is displayed in the area or areas which lie out of the adjusting criteria range where the three-dimensional object is not always likely to be displayed on the monitor 5 in the form of a good image.

In addition, in this third embodiment, while the graphic unit 21 displays the boundary of the areas as the graphic, for example, the whole of the areas may be painted in a translucent color.

Additionally, in the first and second embodiments, while the ultrasonic sensor is used as the sensor unit 3, in the invention, various types of other sensors such as a laser sensor, a millimeter wave radar sensor, a stereo camera sensor, which will be described later on, may be used as the sensor unit. Furthermore, the sensor unit 3 may be switched over depending on purposes: the ultrasonic sensor is used for rearward confirmation at the time of rearward parking, whereas the millimeter wave radar sensor is used for rearward confirmation during normal driving.

### (Fourth Embodiment)

Hereinafter, an on-board camera system of a fourth embodiment according to the invention will be described using the drawings. Note that in this embodiment, like reference numerals are imparted to like portions to those of the second embodiment, so as to avoid the repetition of a similar description.

An on-board camera system of this embodiment is different from the second embodiment in that in addition to a camera 1 (referred to as a primary camera), another camera 5 (referred to as a secondary camera) is placed, and a recognition unit 6 is provided, these two cameras comprising the primary and secondary cameras 1, 5 and the recognition unit 6 making up a sensor unit 7 for detecting a distance to a three-dimensional object lying on the periphery of the vehicle.

Consequently, in this embodiment, in the primary camera 1 which includes a lens 11, a diaphragm 12, a photoelectric conversion unit 13, a criteria determination unit 14, an adjusting unit 15 and an image generating unit 16, in order to send an image from the primary camera to the recognition unit 6, an output of the image generating unit 16 is connected to not only an input of a monitor 4 but also an input of the recognition unit 6.

The secondary camera 5 includes a lens 51, a diaphragm 52, a photoelectric conversion unit 53 and an image generating unit 54. Of these constituent units, the lens 51 is such as to cause incident light to converge on the photoelectric conversion unit 53 in order to photograph a desired image lying on the periphery of the vehicle from a different position than a position where the primary camera 1 is set, and as with the first embodiment, a charge-coupled device (CCD) or the like is used for the photoelectric conversion unit 53. In addition, an output of the photoelectric conversion unit 53 is connected to an input of the image generating unit 54. Additionally, an output of the image generating unit 54 is connected to the input of the recognition unit 6, so that an image photographed by the secondary camera 5 and generated in this image generating unit 54 is captured in the recognition unit 6.

The recognition unit 6 is such as to detect a target object or detect the position of the target object and makes up the sensor unit 7 together with the primary and secondary cameras 1, 5, as has been described above. The recognition unit 6 of this embodiment not only detects a three-dimensional object (for example, a pedestrian or a pole which is a three-dimensional object detected as being closest to the cameras) which lies on the periphery of the vehicle but also calculates a distance between the target object and the vehicle using a primary image sent out from the image generating unit 16 of the primary camera 1 and a secondary image sent out from the secondary camera 5.

Namely, in the recognition unit 6, a parallax relative to individual three-dimensional objects which constitute an identical image generating target object within both images captured by the primary and secondary cameras 1, 5 is calculated, so as to not only calculate respective positions of the three-dimensional objects based on the parallax so calculated but also determine on the three-dimensional object which lies closest to the vehicle to output positional information (for example, positional coordinate information (x, y) or the like) on the three-dimensional object so determined to the criteria determination unit 14.

Note that the recognition unit 6 is connected to the input of an input of the criteria determination unit 14 at an output thereof, so as to output a positional information thereof to the criteria determination unit 14. Due to this, the criteria determination unit 14 determines on a photographing area which is assumed to be highly important for the drive to perform safety driving or the like (and which should constitute a criteria). Namely, in this embodiment, an image area is determined so that for example, the three-dimensional object lying closest to the vehicle is positioned at the center thereof.

The operation of the camera system will be described which is configured as has been described heretofore.

Firstly, images captured from the primary and secondary cameras 1, 5 which make up the sensor unit 7 are converted into electric signals in the photoelectric conversion units 13, 53, respectively, and are then outputted to the image generating units 16, 54 as image signals. On the other hand, in the recognition unit to which these image signals are inputted, the same target object is detected from both the image signals. In particular, in this embodiment, the three-dimensional object which lies closest to the vehicle is detected, and a distance to the relevant three-dimensional object is calculated from the parallax of the primary and secondary cameras 1, 5 relative to the three-dimensional object.

In this way, the sensor unit 7 calculates the respective positions of the three-dimensional objects based on the parallax thereof and determines on the three-dimensional object which lies closest to the vehicle body to output to the criteria determination unit 14 information on the position of the three-dimensional object (for example, the positional coordinate information (x, y) of the image of the primary camera or the like).

Next, the primary camera 1 adjusts the aperture and gain by the adjusting unit 15 so that the three-dimensional object is displayed in the form of a good image based on the positional information on the three-dimensional object which is inputted from the sensor unit 7 and outputs an image signal to the monitor 4.

For example, in the event that a human being as a three-dimensional object exists in the vicinity of the rear of the vehicle body, the human being is detected by the sensor unit 7. Then, an output of a signal related to information on an image photographed by the primary camera 1 is adjusted by the adjusting unit 15 with respect to aperture and gain so that the human being is displayed on the monitor 4 in a good condition.

In addition, in the event that an adjustment is performed so as to display the whole of the screen of the monitor 4 in the form of a good image, for example, depending on sites and environments, there may occur a case where a human being or the like is not necessarily displayed in the form of a good image. As this occurs, the following adjusting process will be carried out.

As has been described in the first embodiment, a ray of light that enters from the lens 11 is caused to converge on the photoelectric conversion unit 13 while the amount thereof being limited by the diaphragm 12. On the other hand, the adjusting unit 15 controls the adjusting amount of the diaphragm 12 so as to control the amount of light that is incident on and received by the photoelectric conversion unit 13 based on a signal inputted from the photoelectric conversion unit 13 and a signal on the range of an adjusting criteria which is inputted from the criteria determination unit 14.

Here, the criteria determination unit 14 determines on the range of the adjusting criteria by the information on the position of the three-dimensional object which is inputted from the sensor unit 7 and outputs a determination to the adjusting unit 15. On the other hand, the adjusting unit 15 adjusts the gain of a signal inputted from the photoelectric conversion unit 13 based on the range of the adjusting criteria and outputs a signal to the image generating unit 16. This image generating unit 16 converts a signal inputted from the adjusting unit 15 into a signal mode that is to be displayed on the monitor 4. Consequently, the three-dimensional object detected by the sensor unit 7 as being closest to the subject vehicle is displayed on the monitor 4 in a good condition, so that the information can be provided to the driver which is important for him or her to perform the safety driving.

As has been described, in the criteria determination unit 14, since, for example, the whole of the screen is divided in advance into a plurality of areas as indicated by dotted lines which are drawn vertically and horizontally in a grid-like fashion, when a three-dimensional object is detected by the sensor unit 7, the position thereof so detected is communicated thereto from the sensor unit 7, whereby the criteria determination unit 14 calculates an area or areas where the three-dimensional object detected by the sensor unit 7 is displayed. As this occurs, by relating the detection area of the sensor unit 7 to the photographing range of the primary camera 1, the criteria determination unit 14 can calculate an area or areas of an image output of the camera 1 where the three-dimensional object is displayed. As a result, the criteria determination unit 14 communicates the area or areas where the three-dimensional object detected by the sensor unit 7 is displayed to the adjusting unit 15 as an adjusting criteria range.

Note that by also providing a criteria determination unit in the secondary camera, a three-dimensional object which has once been detected can be detected in a stable fashion.

In addition, in this embodiment, too, in the event that a plurality of three-dimensional objects are detected by the sensor unit 7, as has been described above, while only the area or areas where the three-dimensional object lying closest to the vehicle body is displayed are communicated to the adjusting unit 15 as an adjusting criteria range, only an area or areas where three-dimensional objects lying within a certain distance from the vehicle body may be communicated to the adjusting unit 15 as an adjusting criteria range. In addition, in the event that no three-dimensional object is detected by the sensor unit 7, the criteria determination unit 14 outputs a predetermined area or areas as an adjusting criteria range.

Thus, while the invention has been described in detail heretofore by reference to the specific embodiments, it is obvious to those skilled in the art that various changes and modifications can be added to the invention without departing from the sprit and scope thereof. For example, while in the first to third embodiments, the criteria determination unit 14 makes no discrimination as to the adjusting criteria area, the adjusting criteria area may be divided into a plurality of levels according to distances from the vehicle for output, while in the adjusting unit 15, signals from the photoelectric conversion unit 13 may be weighted individually in the adjusting criteria areas so divided according the levels thereof, so as to adjust the aperture and gain.

This patent application is such as to be based on the Japanese Patent Application (No. 2004-264260) filed on September 10, 2004, and the contents thereof are incorporated herein by reference.

### <Industrial Applicability>

The camera system of the invention includes the camera for photographing the periphery of the vehicle, the monitor for presenting the driver with an image photographed by the camera and the sensor unit for detecting a three-dimensional object lying on the periphery of the vehicle, the camera including the adjusting unit for automatically adjusting gain and aperture and the criteria determination unit for determining on an image area which should constitute an adjusting criteria using an output of the sensor unit, whereby the camera system has the advantage that a three-dimensional object detected by the sensor unit as lying on the periphery of the vehicle can be presented to the driver in the form of a good image and hence is useful as a safety on-board camera system for large-sized passenger vehicles such as minivans and heavy duty trucks on which the driver has difficulty in confirming the safety in the area at the rear of the vehicle from the driver's seat.

## Claims

1. A camera comprising a lens, a diaphragm, and a photoelectric conversion unit which receives light that has passed through the lens and the diaphragm for photographing the periphery of a motor vehicle, the camera comprising:
an adjusting unit connected to the photoelectric conversion unit and a driving means for the diaphragm for automatically adjusting gain and aperture;
a criteria determination unit for determining on an image area which should constitute an adjusting criteria by utilizing an output from a sensor unit located outside a camera system for detecting a three-dimensional object lying on the periphery of the vehicle; and
an image generating unit for converting a signal inputted from the adjusting unit into a signal mode that is to be displayed on a monitor.

2. The camera as set forth in Claim 1, comprising a graphic unit for superposing a graphic on an area where a three-dimensional object detected by the sensor unit exists.

3. The camera as set forth in Claim 1 or 2, wherein the criteria determination unit has a function to determine an area where a three-dimensional object detected as being closest to the camera is displayed as an adjusting criteria area.

4. The camera as set forth in Claim 1 or 2, wherein the criteria determination unit has a function to determine an area where a three-dimensional object detected as lying within a certain distance from the camera is displayed as an adjusting criteria area.

5. The camera as set forth in any of Claims 1 to 4, wherein the adjusting unit includes an ALC (Automatic Light Control) circuit and/or an AGC (Automatic Gain Control) circuit.

6. The camera as set forth in Claim 5, wherein the ALC circuit automatically adjusts the lens diaphragm so as to maintain constant the amount of incident light.

7. The camera as set forth in Claim 5, wherein the AGC circuit adjusts gain so as to maintain constant the output level of a signal which falls within the range of an adjusting criteria that is communicated from the criteria determination unit.

8. A camera system comprising a camera for photographing the periphery of a motor vehicle, a sensor unit for detecting a three-dimensional object lying on the periphery of the vehicle, and a monitor which presents the driver with an image photographed by the camera, the camera system comprising:
an adjusting unit for automatically adjusting gain and aperture;
a criteria determination unit for determining on an image area which should constitute an adjusting criteria by utilizing an output from the sensor unit; and
an image generating unit for converting a signal inputted from the adjusting unit into a signal mode that is to be displayed on the monitor.

9. A camera system comprising a camera for photographing the periphery of a motor vehicle, a sensor unit for detecting a three-dimensional obj ect lying on the periphery of the vehicle, a monitor which presents the driver with an image photographed by the camera, and a graphic unit for superposing a graphic on an area within the image where the three-dimensional object detected by the sensor unit exists, the camera system comprising:
an adjusting unit for automatically adjusting gain and aperture;
a criteria determination unit for determining on an image area which should constitute an adjusting criteria by utilizing an output from the sensor unit; and
an image generating unit for converting a signal inputted from the adjusting unit into a signal mode that is to be displayed on the monitor.

10. The camera system as set forth in Claim 8 or 9, wherein an image photographed by the camera is divided in advance into a plurality of areas which each constitute a minimum unit for an image area which should constitute an adjusting criteria determined in the criteria determination unit; wherein
the sensor unit is made to detect a three-dimensional object for each range that is photographed by each of the areas so divided; and wherein
the adjusting unit comprises means which regards at least one of the areas as an image area for adjusting criteria.

11. The camera system as set forth in any of Claims 8 to 10, wherein the criteria determination unit has a function to determine an area where a three-dimensional object detected as being closest to the camera is displayed as an adjusting criteria area.

12. The camera system as set forth in any of Claims 8 to 10, wherein the criteria determination unit has a function to determine an area where a three-dimensional object detected as lying within a certain distance from the camera is displayed as an adjusting criteria area.

13. The camera system as set forth in any of Claims 8 to 12, wherein the sensor unit utilizes any of an ultrasonic sensor, a laser radar sensor and a millimeter wave radar sensor.

14. A camera system comprising a primary camera for photographing the periphery of a motor vehicle, a sensor unit for detecting distances from the vehicle to three-dimensional objects lying on the periphery of the vehicle by means of the primary camera and a secondary camera provided separately from the primary camera, and a monitor for presenting the driver with images photographed by the cameras, wherein
the primary camera comprises a lens and a diaphragm, an adjusting unit for automatically adjusting gain and the diaphragm, a criteria determination unit for determining on an image area which should constitute an adjusting criteria by utilizing an output from the sensor unit, and an image generating unit for converting a signal inputted from the adjusting unit into a signal mode that is to be displayed on the monitor; and wherein
the secondary camera comprises at least a lens and a diaphragm, and an image generating unit.

15. The camera system as set forth in Claim 14, wherein the sensor unit comprises a recognition unit for detecting a three-dimensional object lying closest to the vehicle.

16. The camera system as set forth in Claim 14 or 15, wherein the primary camera comprises a graphic unit for superposing a graphic on an area where a three-dimensional object detected by the sensor unit exists.

17. The camera system as set forth in any of Claims 8 to 16, wherein the adjusting unit includes an ALC (Automatic Light Control) circuit and/or an AGC (Automatic Gain Control) circuit.

18. The camera system as set forth in Claim 17, wherein the ALC circuit automatically adjusts the lens diaphragm so as to maintain constant the amount of incident light.

19. The camera system as set forth in Claim 17, wherein the AGC circuit adjusts gain so as to maintain constant an output level of a signal which falls within the range of an adjusting criteria that is communicated from the criteria determination unit.

20. A method for preparing an image by a camera system comprising a camera for photographing the periphery of a motor vehicle, a sensor unit for detecting a three-dimensional object on the periphery of the vehicle, and a monitor for presenting the driver with an image photographed by the camera, the method comprising the steps of:
photographing the periphery of the vehicle;
detecting the position of a three-dimensional object on the periphery of the vehicle;
calculating an area where the three-dimensional object is displayed from information on the position of the three-dimensional object obtained in the position detecting step;
adjusting an image from the information on the position of the three-dimensional object; and
displaying the image on the monitor based on information on the image so adjusted.

21. A method for preparing an image by a camera system comprising a primary camera for photographing the periphery of a motor vehicle, a sensor unit for detecting distances from the vehicle to three-dimensional objects lying on the periphery of the vehicle by means of the primary camera and a secondary camera provided separately from the primary camera, and a monitor for presenting the driver with images photographed by the cameras, the method comprising the steps of:
photographing the periphery of the vehicle;
detecting the position of a three-dimensional object lying on the periphery of the vehicle;
calculating an area where the three-dimensional object is displayed from information on the position of the three-dimensional object obtained in the position detecting step;
adjusting an image from the information on the position of the three-dimensional object; and
displaying the image on the monitor based on information on the image so adjusted.

22. The method for preparing an image by a camera system as set forth in Claim 20 or 21, comprising a step of superposing a graphic on an area of the image where the three-dimensional object exists.
